# EUROPÄISCHE PATENTSCHRIFT

(11) **EP 1 817 513 B1**
(45) Veröffentlichungstag und Bekanntmachung des Hinweises auf die Patenterteilung: **01.05.2013**
(21) Anmeldenummer: 05789346.3
(22) Anmeldetag: 24.09.2005
(51) Int. Cl.: F16H 59/02

(54) **SCHALTKONSOLE EINES KFZ-GETRIEBES**
SHIFTING CONSOLE OF A MOTOR VEHICLE TRANSMISSION
CONSOLE DE CHANGEMENT DE VITESSES DE LA BOITE DE VITESSES D'UN VEHICULE AUTOMOBILE

(30) Priorität: 24.11.2004 DE 102004056778
(43) Veröffentlichungstag der Anmeldung: 15.08.2007
(73) Patentinhaber: Volkswagen Aktiengesellschaft, 38440 Wolfsburg (DE)
(72) Erfinder: MÖLLER, Regina, 38458 Velpke (DE); BLANKE, Sven, 38533 Vordorf (DE); GERMERSHAUSEN, Detlef, 38110 Braunschweig (DE)
(86) Internationale Anmeldenummer: PCT/EP2005/010356
(87) Internationale Veröffentlichungsnummer: WO 2006/056258

(56) Entgegenhaltungen:
- EP-A- 0 809 046
- DE-A1- 19 526 059
- DE-A1- 19 542 555
- DE-C- 633 553

## Beschreibung

Die Erfindung betrifft eine Schattkonsole eines Kfz-Getriebes, wie bekannt aus der DE 633 553 C, mit einem Bedienungshebel zur manuellen Eingabe von Wähl- und / oder Schaltkommandos und mit Mitteln zur mechanischen und / oder elektronischen Erfassung und Übertragung der Wähl- und Schaltstellung des Bedienungshebels an das zugeordnete Getriebe, wobei der Bedienungshebel in mehreren parallelen Schaltgassen um eine gemeinsame geometrische Schaltachse und in einer die Schaltgassen verbindenden Wählgasse um eine weitgehend senkrecht zu der Schaltachse ausgerichtete und mit der Schaltachse in einer gemeinsamen geometrischen Horizontalebene liegende Wählachse schwenkbar gelagert ist, indem der Bedienungshebel mit zwei Lagerarmen ein Kreuzlagerstück seitlich umfasst und in diesem um die Schaltachse drehbar gelagert ist, und indem das Kreuzlagerstück in einem karosseriefesten Gehäuserahmen um die Wählachse drehbar gelagert ist.

Schaltkonsolen mit mehreren Schaltgassen, in denen ein Bedienungshebel zur Eingabe von Schaltkommandos manuell verschwenkbar ist, sind in unterschiedlicher Ausbildung und Anordnung bekannt. Dabei wird die konkrete Ausführung einer Schaltkonsole im Wesentlichen von dem Funktionsumfang und dem Aufbau des Fahrzeuggetriebes bestimmt, mit dem die Schaltkonsole zusammenwirkt. Prinzipiell kann eine Schaltkonsole mit dem zuvor genannten Aufbau mit einem Automatikgetriebe mit manueller Schaltoption zusammenwirken und weist dann neben der üblichen Automatikschaltgasse zusätzlich eine Manuellschaltgasse auf. Ebenso kann die Schaltkonsole mit einem automatisierten Stufenschaltgetriebe mit Automatikoption zusammenwirken und weist dann ebenfalls eine Automatikschaltgasse und eine Manuellschaltgasse auf. Möglich ist aber auch ein Zusammenwirken der Schaltkonsole mit einem manuellen Stufenschaltgetriebe, wobei-die Schaltkonsole dann mehrere Schaltgassen mit den jeweiligen Gangpositionen aufweist.

Aus der DE 195 26 059 C2 ist eine entsprechende mit einem automatischen Getriebe zusammenwirkende Schaltkonsole bekannt, bei der ein Bedienungshebel um eine Schaltachse in einer ersten Automatikschaltgasse mit den Fahrprogrammpositionen P, R, N, D zur Auswahl von Automatikfahrprogrammen und in einer zweiten Manuellschaltgasse mit den Schaltpositionen "+", M, "-" zur manuellen Auslösung von sequenziellen Hoch- und Rückschaltungen schwenkbar gelagert ist. Beide Schaltgassen stehen über eine Verbindungsgasse miteinander in Verbindung, in welcher der Bedienungshebel durch ein Verschwenken um eine senkrecht zu der Schaltgasse ausgerichtete Wählachse bewegbar ist.

In der Automatikschaltgasse ist der Bedienungshebel formschlüssig mit einem konzentrisch zu der Schaltachse gelagerten Zwischenhebel verbunden, an dem ein Seilzug zur mechanischen Übertragung der eingestellten Fahrprogrammposition an das Automatikgetriebe befestigt ist. In der Manuellschaltgasse ist der Bedienungshebel von dem Zwischenhebel entkoppelt und die Schaltposition des Bedienungshebels wird über Positionssensoren erfasst und elektronisch an ein Getriebesteuergerät übermittelt. Der Bedienungshebel ist innerhalb eines topfförmigen Kreuzlagerstückes drehbar um die Schaltachse gelagert, und das Kreuzlagerstück ist in einem karosseriefesten Gehäuserahmen drehbar um die Wählachse gelagert. Beide Drehachsen liegen zwar platzsparend in einer gemeinsamen Horizontalebene. Die Lagerung des Kreuzlagerstückes in dem Gehäuserahmen mit beidseitig an dem Kreuzlagerstück angeformten Lagerbolzen, die mittels Lagerbuchsen in dem Gehäuserahmen drehbar gelagert sind, ist aber nachteilig sehr aufwendig und nimmt viel Bauraum in Anspruch.

In der DE 195 49 437 C2 ist eine ähnliche Schaltkonsole beschrieben, die ebenfalls mit einem automatischen Getriebe zusammenwirkt. Im Unterschied zur DE 195 26 059 C2 umfasst der Bedienungshebel nunmehr mit zwei Schenkeln eines bügelförmigen Lagerteiles das Kreuzlagerstück seitlich außen und ist in diesem um die Schaltachse drehbar gelagert. Das Kreuzlagerstück ist wiederum in einem karosseriefesten Gehäuserahmen um die Wählachse drehbar gelagert, die mit der Schaltachse in einer gemeinsamen Horizontalebene liegt. Die Lagerung des Kreuzlagerstückes in dem Gehäuserahmen ist mit beidseitig an dem Kreuzlagerstück angeformten Lagerbolzen, die mittels Lagerbuchsen in dem Gehäuserahmen drehbar gelagert sind, ähnlich, wie zuvor beschrieben, aufwendig und raumgreifend ausgebildet.

In der DE 195 42 555 C2 ist dagegen eine ähnlich aufgebaute Schaltkonsole beschrieben, die mit einem manuellen Stufenschaltgetriebe zusammenwirkt. Die Schalt- und Wählbewegungen des Bedienungshebels werden über zwei Übertragungsglieder an das Fahrzeuggetriebe übertragen, wobei das erste Übertragungsglied am unteren Ende des Bedienungshebels befestigt ist und das zweite Übertragungsglied über ein Kegelradgetriebe mit dem Kreuzlagerstück in Verbindung steht. Innerhalb des Kreuzlagerstückes ist der Bedienungshebel drehbar um die Schaltachse gelagert, und das Kreuzlagerstück ist in einem karosseriefesten Gehäuserahmen drehbar um die Wählächse gelagert, die mit der Schaltachse in einer gemeinsamen Horizontalebene liegt. Auch in diesem Fall ist die Lagerung des Kreuzlagerstückes in dem Gehäuserahmen in aufwendiger und platzraubender Weise in Form beidseitig an das Kreuzlagerstück angeformter Lagerbolzen mit in den Lagerbohrungen des Gehäuserahmens eingesetzten Lagerbuchsen ausgeführt.

Es ist somit das Problem der vorliegenden Erfindung, eine einfachere und kompaktere Lagerung des Bedienungshebels in einer Schaltkonsole der eingangs genannten Art anzugeben.

Das Problem wird erfindungsgemäß in Verbindung mit dem Oberbegriff des Anspruchs 1 und 10 dadurch gelöst, dass die Lagerung des Bedienungshebels in dem Kreuzlagerstück mittels eines einteiligen Schalt-Lagerbolzens realisiert ist, der konzentrisch zu der Schaltachse beiderseits des Kreuzlagerstückes in jeweils einer Befestigungsbohrung der beiden Lagerarme drehfest befestigt ist, und der in einer Schalt-Lagerbohrung des Kreuzlagerstückes drehbar gelagert ist, und dass die Lagerung des Kreuzlagerstückes in dem Gehäuserahmen mittels eines einteiligen Wähl-Lagerbolzens realisiert ist, der konzentrisch zu der Wählachse beiderseits des Kreuzlagerstückes in jeweils einer Befestigungsbohrung des Gehäuserahmens drehfest befestigt ist, und auf dem das Kreuzlagerstück mit einer Wähl-Lagerbohrung drehbar gelagert ist, wobei ein erster der beiden Lagerbolzen innerhalb des Kreuzlagerstückes einen größeren Durchmesser als der zweite der beiden Lagerbolzen aufweist und im Bereich des Schnittpunktes der Schaltachse mit der Wählachse mit einer koaxial zu dem zweiten Lagerbolzen ausgerichteten Durchgangsbohrung versehen ist, und wobei der zweite Lagerbolzen den ersten Lagerbolzen in der Durchgangsbohrung durchdringt.

Aufgrund der drehbaren Lagerung des Bedienungshebels um die Schaltachse in dem Kreuzlagerstück und der drehbaren Lagerung des Kreuzlagerstückes um die Wählachse in dem Gehäuserahmen jeweils mit einem einteiligen Lagerbolzen ist insgesamt eine sehr stabile und kompakte Lagerung des Bedienungshebels erreicht. Da die Drehung jeweils zwischen dem Lagerbolzen und der Lagerbohrung des Kreuzlagerstückes erfolgt, ist die Verwendung von Lagerbuchsen in den Lagerarmen des Bedienungshebels und in dem Gehäuserahmen vermieden, wodurch Montageaufwand und Bauraum eingespart sind. Die Durchgangsbohrung in dem dickeren der beiden Lagerbolzen ermöglicht dabei eine ungehinderte Drehung um den anderen Lagerbolzen.

Durch eine Anpassung des Durchmessers des dickeren Lagerbolzens an den für eine ungehindert Drehung erforderlichen Durchmesser der Durchgangsbohrung kann selbstverständlich eine zu starke Schwächung des Querschnittes des dickeren Lagerbolzens durch die Durchgangsbohrung vermieden werden. Dies wird in anspruch 1 dadurch erreicht, dass der dünnere Lagerbolzen im Bereich der Durchgangsbohrung eine Einschnürung aufweist, wodurch der erforderliche Durchmesser der Durchgangsbohrung reduziert ist.

Zur Erzielung einer großen Lagerbasis an beiden Lagerungen zwischen den Lagerbolzen und dem Kreuzlagerstück weist in anspruch 10 der kürzere der beiden Lagerbolzen den größeren Durchmesser auf und ist mit der Durchgangsbohrung versehen, und der längere der beiden Lagerbolzen weist den kleineren Durchmesser auf und durchdringt den kürzeren Lagerbolzen in der Durchgangsbohrung. Somit.weisen beide Lagerbolzen und die beiden Lagerbohrungen des Kreuzlagerstückes im Bereich der Relativbewegung zueinander jeweils in etwa gleich große Lagerflächen auf, was günstig für die Stabilität und Lebensdauer der Schaltkonsole ist.

Weist die Schaltkonsole eine Automatikschaltgasse und eine Manuellschaltgasse auf, was bei einem Zusammenwirken mit einem Automatikgetriebe oder einem automatisierten Stufenschaltgetriebe üblich ist, dann ist der Schalt-Schwenkweg des Bedienungshebels, insbesondere in der Automatikschaltgasse, deutlich länger als Wähl-Schwenkweg zwischen den beiden Schaltgassen. Demzufolge weist in diesem Fall bevorzugt der Schalt-Lagerbolzen den größeren Durchmesser auf und ist mit der Durchgangsbohrung versehen, und der Wähl-Lagerbolzen weist den kleineren Durchmesser auf und durchdringt den Schalt-Lagerbolzen in der Durchgangsbohrung. Hierdurch kann der Kreuzlagerkörper und die gesamte Schaltkonsole möglichst schmal ausgeführt werden.

Weist die Schaltkonsole dagegen mehr als drei Schaltgassen auf, was üblicherweise in Verbindung mit einem manuellen Stufenschaltgetriebe der Fall ist, so ist der Wähl-Schwenkweg des Bedienungshebels in der Wählgasse größer als der Schalt-Schwenkweg in den Schaltgassen. Daher weist in diesem Fall bevorzugt der Wähl-Lagerbolzen den größeren Durchmesser auf und ist mit der Durchgangsbohrung versehen, und der Schalt-Lagerbolzen weist den kleineren Durchmesser auf und durchdringt den Wähl-Lagerbolzen in der Durchgangsbohrung. Hierdurch kann der Kreuzlagerkörper und die gesamte Schaltkonsole möglichst kurz ausgebildet werden.

Zur Vermeidung von Lagerbuchsen und weiterem Montageaufwand ist das Kreuzlagerstück zweckmäßig einteilig ausgebildet und besteht aus einem Lagerwerkstoff, so dass das Kreuzlagerstück mit seinen Lagerbohrungen unmittelbar mit den Lagerbolzen in Gleitkontakt steht. Hierzu kann das Kreuzlagerstück besonders kostengünstig als Spritzgussteil aus einem als Lagerwerkstoff geeigneten Kunststoff hergestellt werden.

Zur Vermeidung von Passungsproblemen, die bei der Oberflächenbehandlung von Stahlbolzen auftreten können, sind die Lagerbolzen zur Erzielung einer hohen Passgenauigkeit der Lagerungen vorteilhaft aus Edelstahl hergestellt, so dass eine Nachbehandlung zur Verbesserung der Gleit- und Korrosionseigenschaften überflüssig ist.

Da die Durchgangsbohrung des dickeren Lagerbolzens die richtige Einbaulage in Bezug auf den dünneren Lagerbolzen haben muss, um die Drehbeweglichkeit sicher zu stellen, steht dieser erste Lagerbolzen zur Ausrichtung der Durchgangsbohrung relativ zu dem zweiten, dünneren Lagerbolzen zweckmäßig an mindestens einer seiner beiden Befestigungsbohrungen formschlüssig drehfest mit dem Lagergegenstück, d.h. dem Lagerarm des Bedienungshebels oder dem Gehäuserahmen, in Eingriff. Dies kann auf einfache Weise dadurch erreicht werden, dass der dickere Lagerbolzen im Kontaktbereich mit der Befestigungsbohrung des Lagergegenstückes, des Lagerarms des Bedienungshebels oder des Gehäuserahmens, eine Abflachung und das Lagergegenstück eine entsprechende ebene Verengung der Befestigungsbohrung aufweist.

Weitere Einzelheiten der Erfindung ergeben sich aus der nachfolgenden ausführlichen Beschreibung und den beigefügten Zeichnungen, die beispielhaft zur Erläuterung der Erfindung dienen.

Hierzu zeigt:
- Fig. 1: Eine Querschnittsansicht einer erfindungsgemäßen Schaltkonsole in schematischer Form gemäß Schnitt I - I nach Fig. 2,
- Fig. 2: eine Längsschnittansicht der Schaltkonsole von Fig. 1 gemäß Schnitt II - II von Fig. 1,
- Fig. 3: eine perspektivische Einzelteilansicht einer praktischen Ausführung einer erfindungsgemäßen Schaltkonsole, und
- Fig. 4: eine perspektivische Gesamtansicht der Schaltkonsole von Fig. 3.

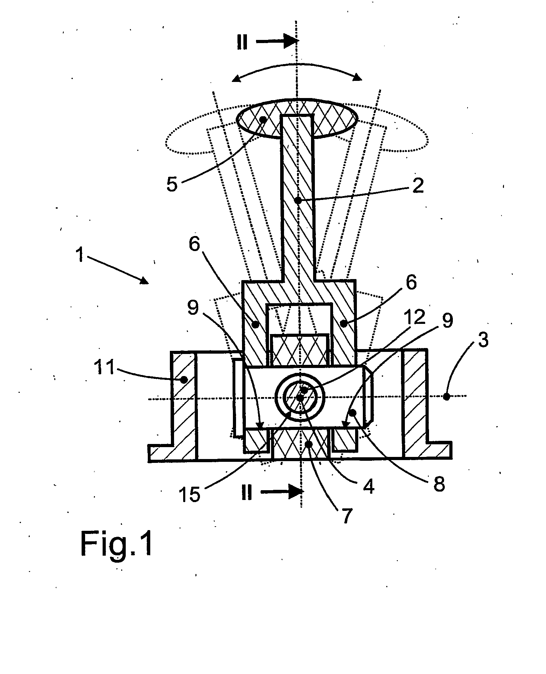

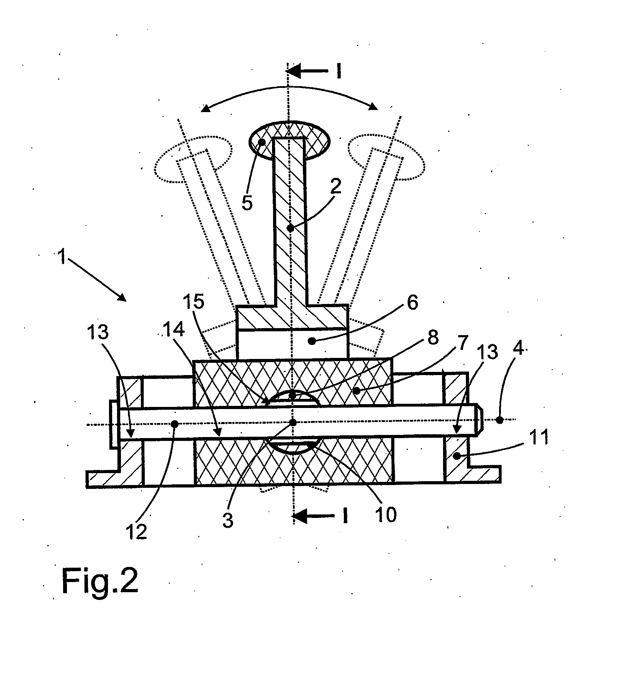

In einer erfindungsgemäßen Schaltkonsole 1 nach Fig. 1, in der mit Blickrichtung in einer Fahrzeuglängsachse die Ansicht eines Querschnitts I - I nach Fig. 2 dargestellt ist, und Fig. 2, in der mit Blickrichtung in einer Fahrzeugquerachse die Ansicht eines Längsschnitts II - II nach Fig. 1 dargestellt ist, ist ein manuell betätigbarer Bedienungshebel 2 um eine geometrische Schaltachse 3 und um eine dazu senkrecht ausgerichtete und mit dieser in einer gemeinsamen geometrischen Horizontalebene liegende geometrische Wählachse 4 drehbar gelagert. Der Bedienungshebel 2 weist an seinem oberen Ende einen Schaltknauf 5 und an seinem unteren Ende zwei gabelförmig angeordnete Lagerarme 6 auf.

Der Bedienungshebel 2 umfasst mit den zwei Lagerarmen 6 seitlich ein Kreuzlagerstück 7 und ist in diesem um die Schaltachse 3 drehbar gelagert, indem ein einteiliger Schalt-Lagerbolzen 8 konzentrisch zu der Schaltachse 3 angeordnet ist, beiderseits des Kreuzlagerstückes 7 in jeweils einer Befestigungsbohrung 9 der beiden Lagerarme 6 drehfest befestigt ist, und in einer Schalt-Lagerbohrung 10 des Kreuzlagerstückes 7 drehbar gelagert ist.

Das Kreuzlagerstück 7 ist in einem karosseriefest befestigten Gehäuserahmen 11 um die Wählachse 4 drehbar gelagert, indem ein einteiliger Wähl-Lagerbolzens 12 konzentrisch zu der Wählachse 4 angeordnet ist, beiderseits des Kreuzlagerstückes 7 in jeweils einer Befestigungsbohrung 13 des Gehäuserahmens 11 drehfest befestigt ist, und indem das Kreuzlägerstück 7 mit einer Wähl-Lägerbohrung 14 drehbar auf dem Wähl-Lagerbolzen 12 gelagert ist:

Um dies zu ermöglichen, weist der Schalt-Lagerbolzen 8 einen größeren Durchmesser als der Wähl-Lagerbolzen 12 auf und ist im Bereich des Schnittpunktes der Schaltachse 3 mit der Wählachse 4 mit einer koaxial zu dem Wähl-Lagerbolzen 12 ausgerichteten Durchgangsbohrung 15 versehen. Der Wähl-Lagerbolzen 12 durchdringt den Schalt-Lagerbolzen 8 in der Durchgangsbohrung 15, die in Verbindung mit den Durchmessern der Lagerbolzen 8, 12 derart bemessen ist, dass der Bedienungshebel 2 zusammen mit dem Schalt-Lagerbolzen 8 im Rahmen des Schalt-Schwenkbereichs frei drehbar ist.

Aufgrund des unmittelbaren Gleitkontaktes der Lagerbohrungen 10, 14 des Kreuzlagerstückes 7 mit den Lagerbolzen 8, 12 sind in einer bevorzugten Ausführung der Schaltkonsole 1 das Kreuzlagerstück 7 zur Erzielung guter Gleiteigenschaften der Lagerungen als ein einteiliges Spritzgussteil aus einem als Lagerwerkstoff geeigneten Kunststoff und die Lagerbolzen 8, 12 zur Erzielung einer hohen Passgenauigkeit der Lagerungen aus Edelstahl hergestellt.

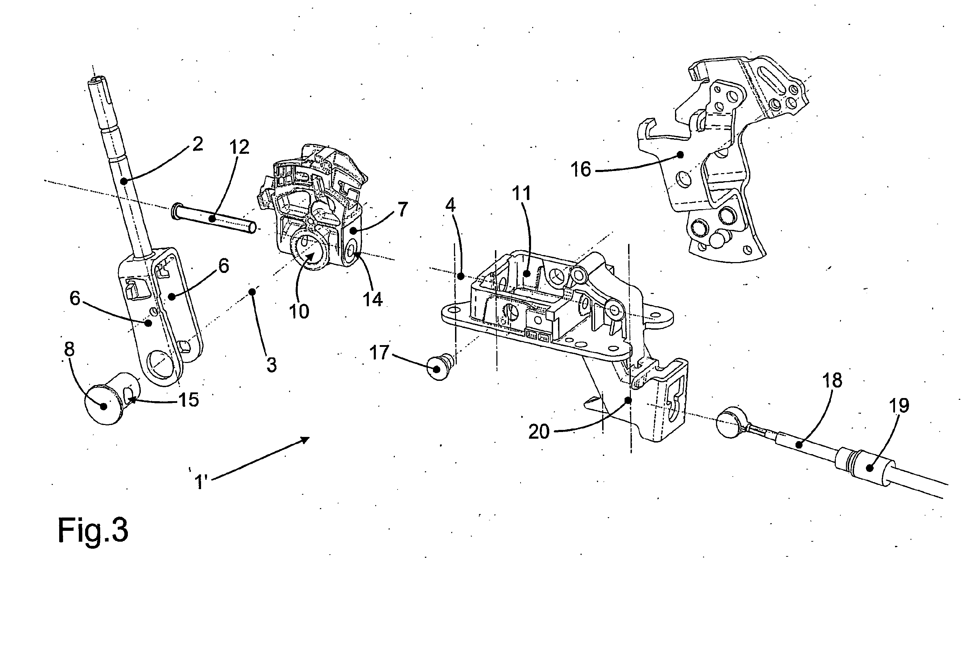

In Fig. 3 sind die wichtigsten Bauteile einer praktischen Ausführung einer entsprechenden Schaltkonsole 1' in einer Einzelteilansicht abgebildet. Die Schaltkonsole 1 ist einem Automatikgetriebe zugeordnete und weist eine Automatikschaltgasse und eine parallel zu dieser angeordnete Manuellschaltgasse auf. Innerhalb der Automatikschaltgasse ist der Bedienungshebel 2 formschlüssig mit einem Zwischenhebel 16 gekoppelt, der konzentrisch zu diesem über Lagerbolzen 17 drehbar um die Schaltachse 3 in dem Gehäuserahmen 11 gelagert ist, und an dem ein Seilzug 18 zur mechanischen Betätigung eines Getriebe-Wählhebels befestigt ist, dessen Hülle 19 an einem Lagerarm 20 des Gehäuserahmens 11 abgestützt wird. Das Kreuzlagerstück 7 weist neben den Lagerbohrungen 10, 14 zusätzlich Formelemente einer Schaltrastierung, einer Schaltsperre und / oder einer Schaltwegbegrenzung auf.

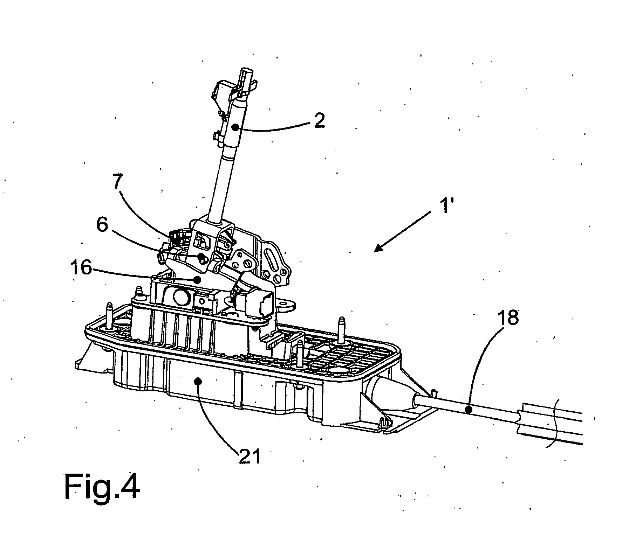

Eine Gesamtansicht der Schaltkonsole 1' nach Fig. 3 ist in Fig. 4 dargestellt, wobei der Gehäuserahmen 11 mit den montierten Bauteilen in ein Basisgehäuse 21 eingesetzt ist.

### Bezugszeichenliste

| | |
|---|---|
| 1 | Schaltkonsole |
| 1' | Schaltkonsole |
| 2 | Bedienungshebel |
| 3 | Schaltachse |
| 4 | Wählachse |
| 5 | Schaltknauf |
| 6 | Lagerarm |
| 7 | Kreuzlagerstück |
| 8 | Schalt-Lagerbolzen |
| 9 | Befestigungsbohrung |
| 10 | Schalt-Lägerbohrung |
| 11 | Gehäuserahmens |
| 12 | Wähl-Lagerbolzen |
| 13 | Befestigungsbohrung |
| 14 | Wähl-Lagerbohrung |
| 15 | Durchgangsbohrung |
| 16 | Zwischenhebel |
| 17 | Lagerbolzen |
| 18 | Seilzug |
| 19 | Hülle |
| 20 | Lagerarm |
| 21 | Basisgehäuse |

## Patentansprüche

1. Schaltkonsole eines Kfz-Getriebes, mit einem Bedienungshebel zur manuellen Eingabe von Wähl- und / oder Schaltkommandos und mit Mitteln zur mechanischen und / oder elektronischen Erfassung und Übertragung der Wähl- und Schaltstellung des Bedienungshebels an das zugeordnete Getriebe, wobei der Bedienungshebel in mehreren parallelen Schaltgassen um eine gemeinsame geometrische Schaltachse und in einer die Schaltgassen verbindenden Wählgasse um eine weitgehend senkrecht zu der Schaltachse ausgerichtete und mit der Schaltachse in einer gemeinsamen geometrischen Horizontalebene liegende Wählachse schwenkbar gelagert ist, indem der Bedienungshebels mit zwei Lagerarmen ein Kreuzlagerstück seitlich umfasst und in diesem um die Schaltachse drehbar gelagert ist, und indem das Kreuzlagerstück in einem karosseriefesten Gehäuserahmen um die Wählachse drehbar gelagert ist, wobei die Lagerung des Bedienungshebels (2) in dem Kreuzlagerstück (7) mittels eines einteiligen Schalt-Lagerbolzens (8) realisiert ist, der konzentrisch zu der Schaltachse (3) beiderseits des Kreuzlagerstückes (7) mit den beiden Lagerarmen (6) drehfest verbunden ist, und der in einer Schalt-Lagerbohrung (10) des Kreuzlagerstückes (7) drehbar gelagert ist, und wobei die Lagerung des Kreuzlagerstückes (7) in dem Gehäuserahmen (11) mittels eines einteiligen Wähl-Lagerbolzens (12) realisiert ist, der konzentrisch zu der Wählachse (4) beiderseits des Kreuzlagerstückes (7) in jeweils einer Befestigungsbohrung (13) des Gehäuserahmens (11) drehfest befestigt ist, und auf dem das Kreuzlagerstück (7) mit einer Wähl-Lagerbohrung (14) drehbar gelagert ist, wobei ein erster der beiden Lagerbolzen (8, 12) innerhalb des Kreuzlagerstückes (7) einen größeren Durchmesser als der zweite der beiden Lagerbolzen (8, 12) aufweist und im Bereich des Schnittpunktes der Schaltachse (3) mit der Wählachse (4) mit einer koaxial zu dem zweiten Lagerbolzen (12) ausgerichteten Durchgangsbohrung (15) versehen ist, und wobei der zweite Lagerbolzen (12) den ersten Lagerbolzen (8) in der Durchgangsbohrung (15) durchdringt
**dadurch gekennzeichnet,**
**dass** der Schalt-Lagerbolzens (8) in jeweils einer Befestigungsbohrung (9) der beiden Lagerarmen (6) befestigt ist und der zweite der beiden Lagerbolzen (8, 12) zur Reduzierung des erforderlichen Durchmessers der Durchgangsbohrung (15) im Bereich der Durchgangsbohrung (15) eine Einschnürung aufweist.

2. Schaltkonsole nach Anspruch 1,
**dadurch gekennzeichnet,**
**dass** zur Erzielung einer großen Lagerbasis an beiden Lagerungen zwischen den Lagerbolzen (8, 12) und dem Kreuzlagerstück (7) der kürzere der beiden Lagerbolzen (8, 12) den größeren Durchmesser aufweist und mit der Durchgangsbohrung (15) versehen ist, und der längere der beiden Lagerbolzen (8, 12) den kleineren Durchmesser aufweist und den kürzeren Lagerbolzen (8) in der Durchgangsbohrung (15) durchdringt.

3. Schaltkonsole nach Anspruch 2,
**dadurch gekennzeichnet,**
**dass** bei Vorhandensein einer Automatikschaltgasse und einer Manuellschaltgasse in Verbindung mit einem Automatikgetriebe oder einem automatisierten Stufenschaltgetriebe der Schalt-Lagerbolzen (8) den größeren Durchmesser aufweist und mit der Durchgangsbohrung (15) versehen ist, und der Wähl-Lagerbolzen (12) den kleineren Durchmesser aufweist und den Schalt-Lagerbolzen (8) in der Durchgangsbohrung (15) durchdringt.

4. Schaltkonsole nach Anspruch 2,
**dadurch gekennzeichnet,**
**dass** bei Vorhandensein von mehr als drei Schaltgassen in Verbindung mit einem manuellen Stufenschaltgetriebe der Wähl-Lagerbolzen (12) den größeren Durchmesser aufweist und mit der Durchgangsbohrung (15) versehen ist, und der Schalt-Lagerbolzen (8) den kleineren Durchmesser aufweist und den Wähl-Lagerbolzen (12) in der Durchgangsbohrung (15) durchdringt.

5. Schaltkonsole nach einem der Ansprüche 1 bis 4,
**dadurch gekennzeichnet,**
**dass** das Kreuzlagerstück (7) einteilig aus einem Lagerwerkstoff besteht und mit seinen Lagerbohrungen (10, 14) unmittelbar mit den Lagerbolzen (8, 12) in Gleitkontakt steht.

6. Schaltkonsole nach Anspruch 5,
**dadurch gekennzeichnet,**
**dass** das Kreuzlagerstück (7) als Spritzgussteil aus einem als Lagerwerkstoff geeigneten Kunststoff hergestellt ist.

7. Schaltkonsole nach Anspruch 5 oder 6,
**dadurch gekennzeichnet,**
**dass** die Lagerbolzen (8, 12) zur Erzielung einer hohen Passgenauigkeit der Lagerungen aus Edelstahl hergestellt sind.

8. Schaltkonsole nach einem der Ansprüche 1 bis 7,
**dadurch gekennzeichnet,**
**dass** der erste der beiden Lagerbolzen (8, 12) zur Ausrichtung der Durchgangsbohrung (15) relativ zu dem zweiten Lagerbolzen (12) an mindestens einer der beiden Befestigungsbohrungen (9) formschlüssig drehfest mit dem Lagergegenstück, nämlich dem Lagerarm (6) oder dem Gehäuserahmen (11), in Eingriff steht.

9. Schaltkonsole nach Anspruch 8,
**dadurch gekennzeichnet,**
**dass** der erste der beiden Lagerbolzen (8, 12) im Kontaktbereich mit der Befestigungsbohrung (9) des Lagergegenstückes eine Abflachung und das Lagergegenstück eine entsprechende ebene Verengung der Befestigungsbohrung (9) aufweist.

10. Schaltkonsole eines Kfz-Getriebes, mit einem Bedienungshebel zur manuellen Eingabe von Wähl- und / oder Schaltkommandos und mit Mitteln zur mechanischen und / oder elektronischen Erfassung und Übertragung der Wähl- und Schaltstellung des Bedienungshebels an das zugeordnete Getriebe, wobei der Bedienungshebel in mehreren parallelen Schaltgassen um eine gemeinsame geometrische Schaltachse und in einer die Schaltgassen verbindenden Wählgasse um eine weitgehend senkrecht zu der Schaltachse ausgerichtete und mit der Schaltachse in einer gemeinsamen geometrischen Horizontalebene liegende Wählachse schwenkbar gelagert ist, indem der Bedienungshebel mit zwei Lagerarmen ein Kreuzlagerstück seitlich umfasst und in diesem um die Schaltachse drehbar gelagert ist, und indem das Kreuzlagerstück in einem karosseriefesten Gehäuserahmen um die Wählachse drehbar gelagert ist, wobei die Lagerung des Bedienungshebels (2) in dem Kreuzlagerstück (7) mittels eines einteiligen Schalt-Lagerbolzens (8) realisiert ist, der konzentrisch zu der Schaltachse (3) beiderseits des Kreuzlagerstückes (7) mit den beiden Lagerarmen (6) drehfest verbunden ist; und der in einer Schalt-Lagerbohrung (10) des Kreuzlagerstückes (7) drehbar gelagert ist, und wobei die Lagerung des Kreuzlagerstückes (7) in dem Gehäuserahmen (11) mittels eines einteiligen Wähl-Lagerbolzens (12) realisiert ist, der konzentrisch zu der Wählachse (4) beiderseits des Kreuzlagerstückes (7) in jeweils einer Befestigungsbohrung (13) des Gehäuserahmens (11) drehfest befestigt ist, und auf dem das Kreuzlagerstück (7) mit einer Wähl-Lagerbohrung (14) drehbar gelagert ist, wobei ein erster der beiden Lagerbolzen (8, 12) innerhalb des Kreuzlagerstückes (7) einen größeren Durchmesser als der zweite der beiden Lagerbolzen (8, 12) aufweist und im Bereich des Schnittpunktes der Schaltachse (3) mit der Wählachse (4) mit einer koaxial zu dem zweiten Lagerbolzen (12) ausgerichteten Durchgangsbohrung (15) versehen ist, und wobei der zweite Lagerbolzen (12) den ersten Lagerbolzen (8) in der Durchgangsbohrung (15) durchdringt **dadurch gekennzeichnet,**
**dass** der Schalt-Lagerbolzens (8) in jeweils einer Befestigungsbohrung (9) der beiden Lagerarmen (6) befestigt ist, dass mehr als drei Schaltgassen in Verbindung mit einem manuellen Stufenschaltgetriebe vorhanden sind und
**dass** zur Erzielung einer großen Lagerbasis an beiden Lagerungen zwischen den Lagerbolzen (8, 12) und dem Kreuzlagerstück (7) der Wähl-Lagerbolzen (12) als der kürzere der beiden Lagerbolzen (8, 12) den größeren Durchmesser aufweist und mit der Durchgangsbohrung (15) versehen ist, und der Schalt-Lagerbolzen (8) als der längere der beiden Lagerbolzen (8, 12) den kleineren Durchmesser aufweist und den kürzeren Wähl-Lagerbolzen (12) in der Durchgangsbohrung (15) durchdringt.

11. Schaltkonsole nach Anspruch 10,
**dadurch gekennzeichnet,**
**dass** der zweite der beiden Lagerbolzen (8, 12) zur Reduzierung des erforderlichen Durchmessers der Durchgangsbohrung (15) im Bereich der Durchgangsbohrung (15) eine Einschnürung aufweist.

12. Schaltkonsole nach einem der Ansprüche 10 oder 11,
**dadurch gekennzeichnet,**
**dass** das Kreuzlagerstück (7) einteilig aus einem Lagerwerkstoff besteht und mit seinen Lagerbohrungen (10, 14) unmittelbar mit den Lagerbolzen (8, 12) in Gleitkontakt steht.

13. Schaltkonsole nach Anspruch 10 bis 12,
**dadurch gekennzeichnet,**
**dass** das Kreuzlagerstück (7) als Spritzgussteil aus einem als Lagerwerkstoff geeigneten Kunststoff hergestellt ist.

14. Schaltkonsole nach Anspruch 12 oder 13,
**dadurch gekennzeichnet,**
**dass** die Lagerbolzen (8, 12) zur Erzielung einer hohen Passgenauigkeit der Lagerungen aus Edelstahl hergestellt sind.

15. Schaltkonsole nach einem der Ansprüche 10 bis 14,
**dadurch gekennzeichnet,**
**dass** der erste der beiden Lagerbolzen (8, 12) zur Ausrichtung der Durchgangsbohrung (15) relativ zu dem zweiten Lagerbolzen (12) an mindestens einer der beiden Befestigungsbohrungen (9) formschlüssig drehfest mit dem Lagergegenstück, nämlich dem Lagerarm (6) oder dem Gehäuserahmen (11), in Eingriff steht.

16. Schaltkonsole nach Anspruch 15,
**dadurch gekennzeichnet,**
**dass** der erste der beiden Lagerbolzen (8, 12) im Kontaktbereich mit der Befestigungsbohrung (9) des Lagergegenstückes eine Abflachung und das Lagergegenstück eine entsprechende ebene Verengung der Befestigungsbohrung (9) aufweist.

## Claims

1. Gearshift console of a motor-vehicle transmission, having an operating lever for manually inputting selector and/or shifting commands and having means for the mechanical and/or electronic detection and transmission of the selector and shifting position of the operating lever to the associated transmission, the operating lever being mounted in a plurality of parallel shift gates such that it can be pivoted about a common geometric shifting axis and in a selector gate which connects the shift gates such that it can be pivoted about a selector axis which is oriented largely perpendicularly with respect to the shifting axis and lies in a common geometric horizontal plane with the shifting axis, by the operating lever laterally encompassing a cross bearing piece with two bearing arms and being mounted in the said cross bearing piece such that it can be rotated about the shifting axis, and by the cross bearing piece being mounted such that it can be rotated about the selector axis in a housing frame which is fixed to the vehicle body, the mounting of the operating lever (2) in the cross bearing piece (7) being realized by means of a single-piece shifting bearing journal (8) which is connected concentrically with respect to the shifting axis (3) in a rotationally fixed manner by way of the two bearing arms (6) on both sides of the cross bearing piece (7), and which is mounted rotatably in a shifting bearing hole (10) of the cross bearing piece (7), and the mounting of the cross bearing piece (7) in the housing frame (11) being realized by means of a single-piece selector bearing journal (12) which is fastened concentrically with respect to the selector axis (4) in a rotationally fixed manner on both sides of the cross bearing piece (7) in in each case one fastening hole (13) of the housing frame (11), and on which the cross bearing piece (7) is mounted rotatably by way of a selector bearing hole (14), a first of the two bearing journals (8, 12) within the cross bearing piece (7) having a greater diameter than the second of the two bearing journals (8, 12) and being provided in the region of the point of intersection of the shifting axis (3) with the selector axis (4) with a through hole (15) which is oriented coaxially with respect to the second bearing journal (12), and the second bearing journal (12) penetrating the first bearing journal (8) in the through hole (15), **characterized in that** the shifting bearing journal (8) is fastened in in each case one fastening hole (9) of the two bearing arms (6) and the second of the two bearing journals (8, 12) has a constriction in the region of the through hole (15) in order to reduce the required diameter of the through hole (15).

2. Gearshift console according to Claim 1, **characterized in that**, in order to achieve a large bearing base on both mountings between the bearing journals (8, 12) and the cross bearing piece (7), the shorter of the two bearing journals (8, 12) has the greater diameter and is provided with the through hole (15), and the longer of the two bearing journals (8, 12) has the smaller diameter and penetrates the shorter bearing journal (8) in the through hole (15).

3. Gearshift console according to Claim 2, **characterized in that**, in the presence of an automatic shift gate and a manual shift gate in conjunction with an automatic transmission or an automated step-by-step variable speed transmission, the shifting bearing journal (8) has the greater diameter and is provided with the through hole (15), and the selector bearing journal (12) has the smaller diameter and penetrates the shifting bearing journal (8) in the through hole (15).

4. Gearshift console according to Claim 2, **characterized in that**, in the presence of more than three shift gates in conjunction with a manual step-by-step variable speed transmission, the selector bearing journal (12) has the greater diameter and is provided with the through hole (15), and the shifting bearing journal (8) has the smaller diameter and penetrates the selector bearing journal (12) in the through hole (15).

5. Gearshift console according to one of Claims 1 to 4, **characterized in that** the cross bearing piece (7) consists in a single piece of a bearing material and is in sliding contact by way of its bearing holes (10, 14) directly with the bearing journals (8, 12).

6. Gearshift console according to Claim 5, **characterized in that** the cross bearing piece (7) is produced as an injection-moulded part from a plastic which is suitable as bearing material.

7. Gearshift console according to Claim 5 or 6, **characterized in that** the bearing journals (8, 12) are produced from stainless steel in order to achieve a highly accurate fit of the mountings.

8. Gearshift console according to one of Claims 1 to 7, **characterized in that** the first of the two bearing journals (8, 12) is in positively locking, rotationally fixed engagement with the bearing counterpart, namely the bearing arm (6) or the housing frame (11), at at least one of the two fastening holes (9) in order to orient the through hole (15) relative to the second bearing journal (12).

9. Gearshift console according to Claim 8, **characterized in that**, in the contact region with the fastening hole (9) of the bearing counterpart, the first of the two bearing journals (8, 12) has a flattened portion and the bearing counterpart has a corresponding flat constriction of the fastening hole (9).

10. Gearshift console of a motor-vehicle transmission, having an operating lever for manually inputting selector and/or shifting commands and having means for the mechanical and/or electronic detection and transmission of the selector and shifting position of the operating lever to the associated transmission, the operating lever being mounted in a plurality of parallel shift gates such that it can be pivoted about a common geometric shifting axis and in a selector gate which connects the shift gates such that it can be pivoted about a selector axis which is oriented largely perpendicularly with respect to the shifting axis and lies in a common geometric horizontal plane with the shifting axis, by the operating lever laterally encompassing a cross bearing piece with two bearing arms and being mounted in the said cross bearing piece such that it can be rotated about the shifting axis, and by the cross bearing piece being mounted such that it can be rotated about the selector axis in a housing frame which is fixed to the vehicle body, the mounting of the operating lever (2) in the cross bearing piece (7) being realized by means of a single-piece shifting bearing journal (8) which is connected concentrically with respect to the shifting axis (3) in a rotationally fixed manner by way of the two bearing arms (6) on both sides of the cross bearing piece (7), and which is mounted rotatably in a shifting bearing hole (10) of the cross bearing piece (7), and the mounting of the cross bearing piece (7) in the housing frame (11) being realized by means of a single-piece selector bearing journal (12) which is fastened concentrically with respect to the selector axis (4) in a rotationally fixed manner on both sides of the cross bearing piece (7) in in each case one fastening hole (13) of the housing frame (11), and on which the cross bearing piece (7) is mounted rotatably by way of a selector bearing hole (14), a first of the two bearing journals (8, 12) within the cross bearing piece (7) having a greater diameter than the second of the two bearing journals (8, 12) and being provided in the region of the point of intersection of the shifting axis (3) with the selector axis (4) with a through hole (15) which is oriented coaxially with respect to the second bearing journal (12), and the second bearing journal (12) penetrating the first bearing journal (8) in the through hole (15), **characterized in that** the shifting bearing journal (8) is fastened in in each case one fastening hole (9) of the two bearing arms (6), **in that** more than three shift gates are present in conjunction with a manual step-by-step variable speed transmission, and **in that**, in order to achieve a large bearing base on both mountings between the bearing journals (8, 12) and the cross bearing piece (7), the selector bearing journal (12) as the shorter of the two bearing journals (8, 12) has the greater diameter and is provided with the through hole (15), and the shifting bearing journal (8) as the longer of the two bearing journals (8, 12) has the smaller diameter and penetrates the shorter selector bearing journal (12) in the through hole (15).

11. Gearshift console according to Claim 10, **characterized in that** the second of the two bearing journals (8, 12) has a constriction in the region of the through hole (15) in order to reduce the required diameter of the through hole (15).

12. Gearshift console according to either of Claims 10 and 11, **characterized in that** the cross bearing piece (7) consists in a single piece of a bearing material and is in sliding contact by way of its bearing holes (10, 14) directly with the bearing journals (8, 12).

13. Gearshift console according to Claims 10 to 12, **characterized in that** the cross bearing piece (7) is produced as an injection-moulded part from a plastic which is suitable as bearing material.

14. Gearshift console according to Claim 12 or 13, **characterized in that** the bearing journals (8, 12) are produced from stainless steel in order to achieve a highly accurate fit of the mountings.

15. Gearshift console according to one of Claims 10 to 14, **characterized in that** the first of the two bearing journals (8, 12) is in positively locking, rotationally fixed engagement with the bearing counterpart, namely the bearing arm (6) or the housing frame (11), at at least one of the two fastening holes (9) in order to orient the through hole (15) relative to the second bearing journal (12).

16. Gearshift console according to Claim 15, **characterized in that**, in the contact region with the fastening hole (9) of the bearing counterpart, the first of the two bearing journals (8, 12) has a flattened portion and the bearing counterpart has a corresponding fiat constriction of the fastening hole (9).

## Revendications

1. Console de changement de vitesse d'une boite de vitesses d'un véhicule automobile, comprenant un levier de commande pour l'entrée manuelle de commandes de sélection et/ou de changement de vitesse et des moyens pour la détection mécanique et/ou électronique et pour le transfert de la position de sélection et de changement de vitesse du levier de commande à la boîte de vitesses associée, le levier de commande étant supporté de manière à pouvoir pivoter dans plusieurs voies de changement de vitesse parallèles autour d'un axe de changement de vitesse géométrique commun et dans une voie de sélection reliant les voies de changement de vitesse autour d'un axe de sélection orienté essentiellement perpendiculairement à l'axe de changement de vitesse et situé avec l'axe de changement de vitesse dans un plan horizontal géométrique commun, le levier de commande entourant latéralement avec deux bras de support un élément de palier à rouleaux croisés et étant supporté à rotation dans celui-ci autour de l'axe de changement de vitesse, et l'élément de palier à rouleaux croisés étant supporté à rotation autour de l'axe de sélection dans un cadre de boîtier fixé à la carrosserie, le support sur palier du levier de commande (2) dans l'élément de palier à rouleaux croisés (7) s'effectuant au moyen d'un boulon de palier de changement de vitesse (8) d'une seule pièce qui est connecté de manière solidaire en rotation aux deux bras de palier (6) concentriquement à l'axe de changement de vitesse (3) de chaque côté de l'élément de palier à rouleaux croisés (7), et qui est supporté à rotation dans un alésage de palier de changement de vitesse (10) de l'élément de palier à rouleaux croisés (7), et le support sur palier de l'élément de palier à rouleaux croisés (7) dans le cadre de boîtier (11) s'effectuant au moyen d'un boulon de palier de sélection (12) d'une seule pièce qui est fixé de manière solidaire en rotation dans un alésage de fixation respectif (13) du cadre de boîtier (11) concentriquement à l'axe de sélection (4) de chaque côté de l'élément de palier à rouleaux croisés (7), et sur lequel l'élément de palier à rouleaux croisés (7) est supporté à rotation avec un alésage de palier de sélection (14), un premier des deux boulons de palier (8, 12) à l'intérieur de l'élément de palier à rouleaux croisés (7) présentant un plus grand diamètre que le deuxième des deux boulons de palier (8, 12), et étant pourvu dans la région du point d'intersection de l'axe de changement de vitesse (3) avec l'axe de sélection (4) d'un alésage traversant (15) orienté coaxialement par rapport au deuxième boulon de palier (12), et le deuxième boulon de palier (12) traversant le premier boulon de palier (8) dans l'alésage traversant (15),
**caractérisée en ce que**
le boulon de palier de changement de vitesse (8) est fixé dans un alésage de fixation respectif (9) des deux bras de palier (6) et le deuxième des deux boulons de palier (8, 12) présente dans la région de l'alésage traversant (15) un rétrécissement destiné à réduire le diamètre nécessaire de l'alésage traversant (15).

2. Console de changement de vitesse selon la revendication 1,
**caractérisée en ce que**
pour obtenir une large base de palier sur les deux supports sur palier entre les boulons de palier (8, 12) et l'élément de palier à rouleaux croisés (7), le plus court des deux boulons de palier (8, 12) présente le plus grand diamètre et est pourvu de l'alésage traversant (15), et le plus long des deux boulons de palier (8, 12) présente le plus petit diamètre et traverse le boulon de palier plus court (8) dans l'alésage traversant (15).

3. Console de changement de vitesse selon la revendication 2,
**caractérisée en ce**
**qu'**en présence d'une voie de changement de vitesse automatique et d'une voie de changement de vitesse manuelle en association avec une boite de vitesses automatique ou une boite de vitesses à rapports étagés automatisée, le boulon de palier de changement de vitesse (8) présente le plus grand diamètre et est pourvu de l'alésage traversant (15), et le boulon de palier de sélection (12) présente le plus petit diamètre et traverse le boulon de palier de changement de vitesse (8) dans l'alésage traversant (15).

4. Console de changement de vitesse selon la revendication 2,
**caractérisée en ce**
**qu'**en présence de plus de trois voies de changement de vitesse en association avec une boite de vitesses manuelle à rapports étagés, le boulon de palier de sélection (12) présente le plus grand diamètre et est pourvu de l'alésage traversant (15), et le boulon de palier de changement de vitesse (8) présente le plus petit diamètre et traverse le boulon de palier de sélection (12) dans l'alésage traversant (15).

5. Console de changement de vitesse selon l'une quelconque des revendications 1 à 4,
**caractérisée en ce que**
l'élément de palier à rouleaux croisés (7) est réalisé d'une seule pièce en un matériau pour palier et est en contact glissant direct avec les boulons de palier (8, 12) avec ses alésages de palier (10, 14).

6. Console de changement de vitesse selon la revendication 5,
**caractérisée en ce que**
l'élément de palier à rouleaux croisés (7) est réalisé sous forme de pièce moulée par injection en un plastique approprié en tant que matériau pour palier.

7. Console de changement de vitesse selon la revendication 5 ou 6,
**caractérisée en ce que**
les boulons de palier (8, 12) sont réalisés en acier spécial de manière à obtenir une grande précision d'ajustement des supports sur palier.

8. Console de changement de vitesse selon l'une quelconque des revendications 1 à 7,
**caractérisée en ce que**
le premier des deux boulons de palier (8, 12), pour l'orientation de l'alésage traversant (15) par rapport au deuxième boulon de palier (12), est en prise par engagement par correspondance géométrique de manière solidaire en rotation au niveau d'au moins l'un des deux alésages de fixation (9), avec l'élément de palier conjugué, à savoir le bras de palier (6) ou le cadre de boîtier (11).

9. Console de changement de vitesse selon la revendication 8,
**caractérisée en ce que**
le premier des deux boulons de palier (8, 12), dans la région de contact avec l'alésage de fixation (9) de l'élément de palier conjugué, présente un aplatissement et l'élément de palier conjugué présente un rétrécissement plan correspondant de l'alésage de fixation (9).

10. Console de changement de vitesse d'une boite de vitesses de véhicule automobile, comprenant un levier de commande pour l'entrée manuelle de commandes de sélection et/ou de changement de vitesse et des moyens pour la détection mécanique et/ou électronique et pour le transfert de la position de sélection et de changement de vitesse du levier de commande à la boite de vitesses associée, le levier de commande étant supporté de manière à pouvoir pivoter dans plusieurs voies de changement de vitesse parallèles autour d'un axe de changement de vitesse géométrique commun et dans une voie de sélection reliant les voies de changement de vitesse autour d'un axe de sélection orienté essentiellement perpendiculairement à l'axe de changement de vitesse et situé avec l'axe de changement de vitesse dans un plan horizontal géométrique commun, le levier de commande entourant latéralement avec deux bras de support un élément de palier à rouleaux croisés et étant supporté à rotation dans celui-ci autour de l'axe de changement de vitesse, et l'élément de palier à rouleaux croisés étant supporté à rotation autour de l'axe de sélection dans un cadre de boîtier fixé à la carrosserie, le support sur palier du levier de commande (2) dans l'élément de palier à rouleaux croisés (7) s'effectuant au moyen d'un boulon de palier de changement de vitesse (8) d'une seule pièce qui est connecté de manière solidaire en rotation aux deux bras de palier (6) concentriquement à l'axe de changement de vitesse (3) de chaque côté de l'élément de palier à rouleaux croisés (7), et qui est supporté à rotation dans un alésage de palier de changement de vitesse (10) de l'élément de palier à rouleaux croisés (7), et le support sur palier de l'élément de palier à rouleaux croisés (7) dans le cadre de boîtier (11) s'effectuant au moyen d'un boulon de palier de sélection (12) d'une seule pièce qui est fixé de manière solidaire en rotation dans un alésage de fixation respectif (13) du cadre de boîtier (11) concentriquement à l'axe de sélection (4) de chaque côté de l'élément de palier à rouleaux croisés (7), et sur lequel l'élément de palier à rouleaux croisés (7) est supporté à rotation avec un alésage de palier de sélection (14), un premier des deux boulons de palier (8, 12) à l'intérieur de l'élément de palier à rouleaux croisés (7) présentant un plus grand diamètre que le deuxième des deux boulons de palier (8, 12), et étant pourvu dans la région du point d'intersection de l'axe de changement de vitesse (3) avec l'axe de sélection (4) d'un alésage traversant (15) orienté coaxialement par rapport au deuxième boulon de palier (12), et le deuxième boulon de palier (12) traversant le premier boulon de palier (8) dans l'alésage traversant (15),
**caractérisée en ce que**
le boulon de palier de changement de vitesse (8) est fixé dans un alésage de fixation respectif (9) des deux bras de palier (6), **en ce que** plus de trois voies de changement de vitesse sont prévues en association avec une boîte de vitesses à rapports étagés manuelle et
**en ce que** pour obtenir une large base de palier sur les deux supports sur palier entre les boulons de palier (8, 12) et l'élément de palier à rouleaux croisés (7), le boulon de palier de sélection (12), étant le plus court des deux boulons de palier (8, 12), présente le plus grand diamètre et est pourvu de l'alésage traversant (15), et le boulon de palier de changement de vitesse (8), étant le plus long des deux boulons de palier (8, 12), présente le plus petit diamètre et traverse le boulon de palier de sélection plus court (12) dans l'alésage traversant (15).

11. Console de changement de vitesse selon la revendication 10,
**caractérisée en ce que**
le deuxième des deux boulons de palier (8, 12), présente dans la région de l'alésage traversant (15) un rétrécissement destiné à réduire le diamètre nécessaire de l'alésage traversant (15).

12. Console de changement de vitesse selon la revendication 10 ou 11,
**caractérisée en ce que**
l'élément de palier à rouleaux croisés (7) est réalisé d'une seule pièce en un matériau pour palier et est en contact glissant direct avec les boulons de palier (8, 12) avec ses alésages de palier (10, 14).

13. Console de changement de vitesse selon les revendications 10 à 12,
**caractérisée en ce que**
l'élément de palier à rouleaux croisés (7) est réalisé sous forme de pièce moulée par injection en un plastique approprié en tant que matériau pour palier.

14. Console de changement de vitesse selon la revendication 12 ou 13,
**caractérisée en ce que**
les boulons de palier (8, 12) sont réalisés en acier spécial de manière à obtenir une grande précision d'ajustement des supports sur palier.

15. Console de changement de vitesse selon l'une quelconque des revendications 10 à 14, **caractérisée en ce que**
le premier des deux boulons de palier (8, 12), pour l'orientation de l'alésage traversant (15) par rapport au deuxième boulon de palier (12), est en prise par engagement par correspondance géométrique de manière solidaire en rotation au niveau d'au moins l'un des deux alésages de fixation (9), avec l'élément de palier conjugué, à savoir le bras de palier (6) ou le cadre de boîtier (11).

16. Console de changement de vitesse selon la revendication 15,
**caractérisée en ce que**
le premier des deux boulons de palier (8, 12), dans la région de contact avec l'alésage de fixation (9) de l'élément de palier conjugué, présente un aplatissement et l'élément de palier conjugué présente un rétrécissement plan correspondant de l'alésage de fixation (9).
